Europäisches Patentamt

European Patent Office

Office européen des brevets

(19)

(11) Veröffentlichungsnummer: **0 176 849**
A2

## (12) EUROPÄISCHE PATENTANMELDUNG

(21) Anmeldenummer: 85111674.9

(22) Anmeldetag: 16.09.85

(51) Int. Cl.⁴: **D 04 H 1/64**
D 04 H 3/12

(30) Priorität: 28.09.84 DE 3435642

(43) Veröffentlichungstag der Anmeldung:
09.04.86 Patentblatt 86/15

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Heidel, Peter, Dr.
Eulenweg 6
D-8903 Bobingen(DE)

(54) Vliesstoff.

(57) Ein Vliesstoff aus mit einem Bindemittel verfestigten Fasern oder Filamenten der für den Einsatz als Trägerbahn in Dachbahnen geeignet ist, die gegen Flugfeuer und strahlende Wärme beständig sind, wird erhalten durch Einarbeiten von gegen den Angriff von Hitze und Feuer beständigen Feststoffteilchen, deren räumliche Ausdehnung klein ist gegenüber der wirksamen Öffnungsweite der Vliesschicht. Durch dieses Größenverhältnis wird eine gute Durchdringung des Vliesstoffes mit den Feststoffteilchen gewährleistet, wobei sich ein mehr oder minder ausgeprägter Dichtegradient der Feststoffteilchen über die Vliesschichtdicke ausbildet.

EP 0 176 849 A2

Croydon Printing Company Ltd

## "Vliesstoff"

Die vorliegende Erfindung betrifft einen Vliesstoff, der bevorzugt aus Polyesterfilamenten besteht und für den Einsatz als Trägerbahn in Dachbahnen geeignet ist, die gegen Flugfeuer und strahlende Wärme beständig sind. Solche Dachbahnen sind meist ein- oder beidseitig mit Bitumen beschichtet, können aber auch eine Beschichtung aus Elastomeren oder Plastomeren aufweisen.

Zur Verbesserung des Brandverhaltens derartiger Dachbahnen nach DIN 4102/Teil 7 werden häufig Schichtstoffe, wie sie z.B. in der DE-PS 28 27 136 oder in dem DE-GM 77 39 489 beschrieben sind, als Trägerbahn eingesetzt.

Es ist weiterhin vorgeschlagen worden, Vliesstoffe aus flammhemmenden Faserrohstoffen herzustellen. Der Einsatz derartiger Faser- bzw. Fädenrohstoffe bei der Herstellung der benötigten Vliese führte jedoch nicht zu dem erwünschten vollen Erfolg. Ein Ausbreiten des Brandes in unteren Schichten einer Dachabdeckung konnte so nicht verhindert werden. Auch flammhemmende Zusätze zur Bitumenmasse bzw. zur Polymermasse zeigten keinen Erfolg. Die flammhemmenden Zusätze fließen in einem Brandfall mit dem Bitumen davon, so daß der zurückbleibende Vliesstoff und die unteren Schichten nicht mehr durch diese Zusätze geschützt werden.

Ferner wurde vorgeschlagen, den Vliesstoff mit einer an sich bekannten flammhemmenden Ausrüstung zu versehen, die bei den Verarbeitungstemperaturen der Beschichtungsmasse und der Dachbahn sich noch inert verhält, bei höheren Temperaturen jedoch eine weitgehend geschlossene vorzugsweise schaumartige Schicht ausbildet.

Diese Vorschläge führen zwar alle zu einer deutlichen Verbesserung des Brandverhaltens, sind aber in ihrer Ausführung sehr aufwendig.

Überraschenderweise wurde nun gefunden, daß das Brandverhalten von Vliesstoffen bzw. von daraus hergestellten Dachbahnen deutlich verbessert wird, wenn der Vliesstoff im Bindemittel verteilt inerte kleinvolumige Feststoffteilchen enthält. Inert bedeutet, daß die Feststoffteilchen gegen den Angriff von Hitze und Feuer beständig, d.h. nicht oder nur schwer entflammbar sind. Unter kleinvolumigen Feststoffteilchen sind solche zu verstehen, deren räumliche Ausdehnung klein ist gegenüber der wirksamen Öffnungsweite der Vliesschicht, wie sie für Geotextilien in Heft 56 (1983) der Mitteilungen des Franzius-Instituts für Wasserbau und Küsteningenieurwesen der Universität Hannover, S. 379 - 381 definiert wird.

Beispiele für derartige Feststoffteilchen sind anorganische, pulverisierte Produkte mit einem mittleren Partikeldurchmesser von bis zu 100 μm, bevorzugt 0,5 bis 20 μm. Solche Produkte mit vornehmlich kugeliger Form können z.B. aus Calciumcarbonat, Kaolin, Silicaten u.a. Mineralien bestehen.

Für spezielle Einsatzgebiete eignen sich auch gemahlene Glasfasern mit einem Durchmesser von 5 bis 100 μm, bevorzugt 10 - 25 μm, und einer mittleren Länge von 10 μm bis 300 μm, bevorzugt 50 bis 200 μm, allein oder im Gemisch mit anderen Feststoffen oder Fasern.
Neben gemahlenen Fasern aus Glas können andere anorganische faserige Produkte, z.B. keramische oder mineralische Fasern, verwendet werden. Es können aber auch Fasern mit flammfester Ausrüstung eingesetzt werden.

Der erfindungsgemäße Vliesstoff kann aus Fasern oder Filamenten aus den bekannten synthetischen Polymeren bestehen. Bevorzugt ist jedoch ein Vliesstoff aus genadelten und mit einem Bindemittel verfestigten Filamenten aus Polyester, vorzugsweise Polyethylenterephthalat, der nach dem bekannten spun bond-Verfahren, d.h. durch Ablegen der frischgesponnenen Polyesterfilamente zu einem Vlies, gebildet wurde.

Für die Verfestigung von Vliesstoffen werden Bindemittel häufig in Form wässriger Dispersionen oder wässriger Lösungen verwendet. Bekannte Bindemittel in Form wässriger Dispersionen sind Mono-, Co- oder Terpolymerisate aus Acrylsäureestern, Acrylsäureamiden, Acrylnitril, Butadien und Styrol.

Besonders geeignet für die Herstellung des erfindungsgemäßen Vliesstoffes sind aber Bindemittel auf Basis von wasserlöslichen Harnstoff-Formaldehyd-, Melamin-Formaldehyd-, Phenol-Formaldehyd-Kondensaten oder in Wasser dispergierte Polymerisate von Vinylidenchlorid und Vinylchlorid die allein oder im Gemisch angewendet werden.

Die Bindemittel können nach verschiedenen, z.B. in "Vliesstoffe", G. Thieme Verlag Stuttgart, New York, herausgegeben von J. Lünenschloß u.W. Albrecht 1982, Seite 177 bis 199, beschriebenen Verfahren appliziert werden. Gängigstes Verfahren ist die Foulardierung in einem Trog mit nachfolgendem Quetschwalzenpaar. Durch Einwirkung von Wärme wird dem Bindemittel Wasser entzogen und die Bindemittel-Filament-Bindung gebildet.

Die Feststoffteilchen werden bevorzugt der wässrigen Bindemittelflotte zugesetzt und durch Rühren in der Schwebe gehalten.

Das Absetzen der Feststoffteilchen kann durch Rühren, aber auch durch Zugabe eines Verdickungsmittels, z.B. auf Basis löslicher Cellulose-Derivate, verhindert werden.

In der wässrigen Flotte soll das Bindemittel in einer Konzentration von 15 bis 40 %, vorzugsweise 18 bis 25 %, enthalten sein. Die faserigen oder pulverigen Substanzen werden in einem Anteil von 10 bis 150 %, bezogen auf das feste Bindemittel, angewendet.

Beim Begießen eines Vlieses mit einer Suspension aus z.B. gemahlenen Glasfasern und einem Bindemittel wird ein Vliesstoff erhalten, der einen Verbund aus Polyesterfilamenten, gemahlenen Glasfasern und Bindemittel darstellt.

Die wässrige Flotte mit den suspendierten Zusätzen kann aber auch von einer Seite, z.B. auf die obere Seite des Vlieses, gegossen und durch Rakeln oder mittels rotierender Walzen gleichmäßig auf der Vliesoberfläche verteilt werden. Das u.U. im Überschuß angebotene Bindemittel durchfließt nach Art einer Filtration das Vlies. Überschüssiges Bindemittel wird gesammelt, mit den genannten faserigen oder pulverigen Zusätzen aufgestärkt und in den Bindemittelkreislauf zurückgeführt. Auf dem Vlies bildet sich hierbei zuerst eine schichtartige Ansammlung der faserigen bzw. pulverigen Zusätze, die dann das Vlies durchdringt. Nach Verdampfen des mit der wässrigen Bindemittelsuspension in das Vlies eingebrachten Wassers und Aushärten des Bindemittels wird der erfindungsgemäße Vliesstoff gebildet.

Mit gleichem Ergebnis kann der erfindungsgemäße Vliesstoff gebildet werden, wenn ein Vlies mit der wässrigen Bindemittel-Flotte nach dem Foulard-Verfahren getränkt wird und auf das imprägnierte Vlies die faserigen oder pulverigen Substanzen in dünner Schicht aufgerieselt oder gestreut werden. Dabei ist es günstig, wenn das imprägnierte Vlies soviel Bindemittel-Flotte enthält, daß durch Diffusion und Aufsaugen die aufgestreuten Substanzen vollständig von der Bindemittel-Flotte durchtränkt werden.

Entscheidend ist die geringe räumliche Ausdehnung der Feststoffteilchen, d.h. klein gegenüber der wirksamen Öffnungsweite der Vliesschicht. Hierdurch wird eine gute Durchdringung des Vliesstoffes mit den Feststoffteilchen gewährleistet, im Gegensatz zu einer Schichtbildung bei Zusatz größerer Feststoffteilchen. Je nach Art der Aufbringung des Bindemittels ist auch ein mehr oder minder ausgeprägter Dichtegradient der Feststoffteilchen über die Vliesschichtdicke zu beobachten, der je nach Einsatzgebiet gezielt eingestellt werden kann.

Beispiel

Ein vernadeltes Filamentvlies (TREVIRA SPUNBOND Type 13)
mit einem Flächengewicht von 150 g/m² und einem Titer
des Einzelfilaments von 4 dtex wurde auf einem Nadelrahmen (Größe 43 x 33 cm) aufgespannt und mit einer
Suspension aus einer handelsüblichen wasserlöslichen
hitzehärtbaren Melaminderivat-Formaldehyd-Harz-Lösung
und einem gemahlenen, mikrokristallinem Calciumcarbonat
mit einem mittlerem Teilchendurchmesser von 1 µm (z.B.
Omyalite 90 der Omya GmbH) begossen. Die in dem imprägnierten Vlies enthaltene überschüssige Suspension wurde
in einem Quetschwalzenwerk bei einem Liniendruck von
300 N/cm abgequetscht. Die angewendete Suspension enthielt das Melaminderivat-Formaldehyd-Harz in einer
Konzentration von 15 % bezogen auf das getrocknete
Harz. Das gemahlene Calciumcarbonat war in der Suspension in einer Konzentration von 50 % bezogen auf das
getrocknete Harz enthalten. Die Suspension wurde durch
Rühren in der Schwebe gehalten. Nach Trocknen auf einem
Spannrahmen bei einer Temperatur von 180°C und einer
Verweilzeit von 4 Minuten betrug das Vliesgewicht
209 g/m² entsprechend einer Bindemittel/Calciumcarbonat-
Auflage von 39 %. Die Prüfung der Zugfestigkeit ergab
einen Wert von 520 Newton pro 5 cm Streifenbreite gemessen in Längsrichtung des Vliesstoffes bei einer
Dehnung von 35 %. Das gemahlene Calciumcarbonat war im
gesamten Querschnitt des Vliesstoffes enthalten.

Beim Verbrennen des Vliesstoffes bildete sich eine  feste,
gerüstartig verkohlende Schicht aus.

## Patentansprüche

1. Vliesstoff aus mit einem Bindemittel verfestigten Fasern oder Filamenten, dadurch gekennzeichnet, daß der Vliesstoff im Bindemittel verteilt inerte kleinvolumige Feststoffteilchen enthält.

2. Vliesstoff aus genadelten, mit einem Bindemittel verfestigten und nach dem spunbond-Verfahren abgelegten Polyesterfilamenten, dadurch gekennzeichnet, daß der Vliesstoff im Bindemittel verteilt inerte kleinvolumige Feststoffteilchen enthält.

3. Vliesstoff nach Anspruch 1 oder 2, dadurch gekennzeichnet, daß die Feststoffteilchen anorganische, pulverisierte Produkte mit einem mittleren Durchmesser von bis zu 100 µm, vorzugsweise 0,5 bis 20 µm sind.

4. Verfahren zur Herstellung eines Vliesstoffes nach wenigstens einem der vorhergehenden Ansprüche, dadurch gekennzeichnet, daß die Feststoffteilchen dem wässrigen Bindemittel zugesetzt und mit diesem auf das Vlies aufgebracht werden.

5. Verfahren zur Herstellung eines Vliesstoffes nach wenigstens einem der Ansprüche 1 - 3, dadurch gekennzeichnet, daß die Feststoffteilchen auf das mit dem Bindemittel versehene Vlies in dünner Schicht aufgerieselt oder gestreut werden.